# EUROPÄISCHE PATENTSCHRIFT

(11) **EP 1 258 347 B1**
(45) Veröffentlichungstag und Bekanntmachung des Hinweises auf die Patenterteilung: **21.02.2007**
(21) Anmeldenummer: 02009161.7
(22) Anmeldetag: 24.04.2002
(51) Int. Cl.: B32B 27/12, B32B 5/02, C09J 7/02, G10K 11/168, H02G 3/04

(54) **Vorrichtung zum Schutz eines Gegenstandes vor Beschädigungen**
Device for the protection of an article against damages
Dispositif de protection d'un article contre l'endommagement

(30) Priorität: 24.04.2001 DE 10120055; 10.10.2001 DE 10149975
(43) Veröffentlichungstag der Anmeldung: 20.11.2002
(73) Patentinhaber: Hänsel Verbundtechnik GmbH, 58640 Iserlohn (DE)
(72) Erfinder: Hessmer, Michael, 58638 Iserlohn (DE); Thill, Ulrike, 58239 Schwerte (DE)
(74) Vertreter: Schmidt, Axel

(56) Entgegenhaltungen:
- EP-A- 0 224 834
- WO-A-00/78574
- WO-A-99/50943
- DE-A- 3 134 712
- DE-A- 4 236 817
- US-A- 3 614 299
- US-A- 3 716 437
- US-A- 4 705 715
- DATABASE WPI Section Ch, Week 199150 Derwent Publications Ltd., London, GB; Class A18, AN 1991-364489 XP002208283 & JP 03 243344 A (KANZAKI PAPER MFG CO LTD), 30. Oktober 1991 (1991-10-30)

## Beschreibung

Die vorliegende Erfindung betrifft eine Vorrichtung zum Schutz eines Gegenstandes vor Beschädigungen nach dem Oberbegriff von Anspruch 1 und ein Verfahren zur Herstellung.

Aus dem Stand der Technik sind diverse Formen von Schutzvorrichtungen bekannt, die in Form flächiger oder punktueller Abdeckungen als Flicken, Sticker, Schoner oder als linienförmige Abdeckungen als Bandagierungen bzw. Umwicklungen Verschleiß an der Oberfläche mindestens teilweise abgedeckter Körper bei Vibration oder Reibung verhindern oder wenigstens deutlich mindern sollen.

Besonders hohe Anforderungen an derartige Schutzvorrichtungen ergeben sich jedoch im Bereich des Maschinenbaus, wo auch unter Einfluß von hohen Temperaturen und Temperaturschwankungen, schwierigen Verlegungen und starker Belastung insbesondere durch Vibrationen und/oder Reibung ein wartungsfreier Schutz von Körpern gegen Abrieb und sonstige Beschädigungen sichergestellt werden muß. Beispielsweise sind im Bereich des Motorraums eines Kraftfahrzeugs Kabelstränge aufgrund von Vibrationen des Motors, des Fahrwerks und/oder anderer beweglicher Teile sowie der schwierigen Verlegung einem besonders starken Abrieb ausgesetzt. Ein Aufreiben oder Aufscheuern kann an einem Kabel, einem Kabelstrang, einem Kabelbaum oder sonstigen Leitungen oder Litzen sowie einer Bremsleitung oder einem Hüllrohre und dergleichen gerade in einem Hüllrohre und dergleichen gerade in Kraftfahrzeugen mit der Folge von auch schwerwiegenden Fehlfunktionen auftreten. Derartige Probleme treten sowohl in Land-, Wasser- wie auch in Luftfahrzeugen oder stationären industriellen Anlagen oder im Maschinenbau generell auf. Für langgestreckte Gegenstände der vorstehend nur beispielhaften Aufzählung wird daher nachfolgend ohne Beschränkung der Erfindung der Begriff "Kabelbaum" verwendet.

Bekannt ist in den vorstehend nur beispielhaft aufgeführten Bereichen zur Minderung des Verschleißes insbesondere die Verwendung von Wellrohren oder dicken Wickelbändern mit komplexem Aufbau als Schutzummantelung. Die sich daraus ergebenden Kabelbäume zeichnen sich jedoch nachteilig bei größerem Platzbedarf durch eine stark verminderte Flexibilität aus, so daß ein Verlegen vorgefertigter Kabelbäume oder ein Anbringen derartiger Schutzvorrichtungen vor Ort nur noch sehr erschwert vorgenommen werden kann. Da gerade in Motorräumen moderner Kraftfahrzeuge die zur Verfügung stehenden Bauräume immer kleiner werden, sind herkömmliche Schutzmaterialien insgesamt nur noch sehr bedingt einsetzbar.

WO9950943 offenbart eine Schutzummantelung für Kabelbäume mit zwei durch Kleben verbundenen textile Schichten.

WO0078574 offenbart eine mindestens dreischichtige Schutzummantelung ohne Gewebe für Kabelbäume.

Es ist daher die Aufgabe der vorliegenden Erfindung, eine Vorrichtung zum Schutz eines Gegenstandes insbesondere gegen Abrieb zu schaffen, der sich gegenüber bekannten Vorrichtungen durch eine verbesserte Flexibilität, hohe Abriebfestigkeit und einen vergleichsweise geringen Platzbedarf auszeichnet.

Diese Aufgabe wird erfindungsgemäß durch eine Vorrichtung mit den Merkmalen von Anspruch 1 gelöst. Auch ein Herstellungsverfahren nach Anspruch 15 stellt eine Lösung dieser Aufgabe dar. Vorteilhafte Weiterbildungen der Erfindung sind Gegenstand der jeweiligen Unteransprüche.

Erfindungsgemäß umfasst eine Vorrichtung einen Schichtaufbau mit einer textilen Schicht und einer darauf aufkalandrierten Folie. Damit unterscheidet sich eine erfindungsgemäße Vorrichtung als zweischichtiger Aufbau von bekannten Kombinationen aus einer Textilschicht und einer Folie insbesondere durch die Art der dauerhaften Verbindung der beiden Bestandteile miteinander. Im Zuge des Kalandrierens ist die Oberfläche der Folie soweit erweicht, daß ein Folienmaterial mindestens teilweise in Fadenkreuzungszwischenräume oder Maschen des textilen Materials in das Textilmaterial eindringt. Im folgenden wird der Begriff Poren für Fadenkreuzungszwischenräume und ähnliche Öffnungen in textilen Materialien allgemein verwendet.

Nach dem Erkalten ist somit eine Verbindung der beiden Schichten hergestellt worden. Aufgrund der teilweisen Einbettung der Textilschicht als Außenschicht einer erfindungsgemäßen Schutzvorrichtung in dem Folienmaterial zeichnet sich diese durch eine besonders hohe Abriebfestigkeit aus.

Es ergeben sich bei der Verwendung einer erfindungsgemäßen Vorrichtung in einer angepassten Ausführungsform als selbstklebendes Wickelband gegenüber bekannten Schutzvorrichtungen insbesondere in Form von Umwicklungen aus einem selbstklebenden Streifen aus PVC folgende Vorteile: PVC-Klebestreifen müssen unter Zug aufgeklebt oder gewickelt werden, um auch bei Überlappungen gut und sicher zu kleben. Danach tritt jedoch eine Schrumpfung des PVC-Materials ein, wodurch es zu einer Versteifung der gesamten Anordnung kommt. Eine erfindungsgemäße Kombination bewirkt dem gegenüber eine Stabilisierung der Folie bezüglich seiner Dehnbarkeit und macht eine Textilschicht als zweite Komponente zudem schubfest. Die beiden Komponenten stabilisieren sich damit in Kombination gegenseitig. Es kommt somit zu keiner nennenswerten Schrumpfung, so dass die gesamte Anordnung auch nicht aufsteift.

Vorteilhafterweise ist die textile Schicht engmaschig oder weist nur sehr kleine Poren auf. So kann ein Einfließen erwärmten thermoplastischen Materials der Folie beim Kalandrieren zum Erzielen einer bestimmten Trennkraft von textiler Schicht und Folie sehr genau eingestellt werden.

Als textile Schicht kann vorteilhafterweise ein Gewebe, Gewirke oder auch ein Vlies verwendet werden. Das Gewebe kann aus Polyester, einem Polyamid und/oder anderen Synthesefaser- oder Synthesefilamentgarnen bestehen und eine Kettfadendichte von ca. 15 bis etwa 25 Fäden pro Zentimeter aufweisen, wobei jedoch ungefähr 20 Fäden pro Zentimeter bevorzugt werden. Es wird eine Schussfadendichte von ca. 10 bis etwa 22 Fäden pro Zentimeter eingestellt, in einer bevorzugten Ausführungsform der Erfindung beträgt die Schußfadendichte ungefähr 17 Fäden pro Zentimeter. Das Kettgarn weist eine Feinheit von ca. 190 bis etwa 240 dtex auf, vorzugsweise 2 x 110 dtex f 36. Das Schußgarn weist eine Feinheit von ca. 200 bis etwa 280 dtex auf, vorzugsweise jedoch eine Feinheit von 2 x 130 dtex f 36. Es ergibt sich damit insgesamt ein Gewebe mit einem Flächengewicht von ca. 70 bis etwa 150 g/m², das in einer bevorzugten Ausführungsform der Erfindung jedoch ein Flächengewicht von ungefähr 95 g/m² und eine Dicke von ca. 0,1 bis etwa 0,3 mm aufweist, vorzugsweise jedoch eine Dicke von ungefähr 0,2 mm. Das Gewebe kann eine Leinwandbindung aufweisen, aber auch andere Bindungen sind unter Beachtung der Gesamteigenschaften einer erfindungsgemäßen Vorrichtung möglich.

Bei einer bevorzugten Ausführungsform der textilen Schicht als Gewirke besteht eine Kette aus einem Polyester-Glattgarn einer Feinheit von 76 dtex f24 x 1. Der Schuß des Gewirkes besteht aus einem texturierten Polyester-Garn einer Feinheit von 167 dtex f48 x 2, wobei beide Garne in einer Ausführungsform der Erfindung Spinndüsen-gefärbt schwarz sind. Das Flächengewicht des Gewirkes beläuft sich auf ca. 100 bis ca. 160 g/m², bei einer Ausführungsform der Erfindung auf ca. 128 g/m² bei einer Dicke von ca. 0,3 mm, bei einer bevorzugten Ausführungsform jedoch auf ca. 145 g/m². Das Gewirke wird konstruiert mit ungefähr 250 Maschen-Reihen pro 10 cm und einer Kettfadenzahl von 24 gg. Vorzugsweise wird ein Gewirke mit Schußeintrag und mit einer geschlossenen Franse als Bindung der Kette verwendet.

Ist die textile Schicht als Vlies ausgebildet, so besteht dieses aus Synthesefasern, vorzugsweise aus Polyester-Fasern. Hierbei kann es sich um 100% Polyester-Normalfasern handeln oder aber um eine Mischung von Polyester-Normalfasern mit Polyester- oder anderen BiCom-Fasern. Der BiCom-Faser-Anteil beträgt ca. 5 bis etwa 45%, vorzugsweise jedoch ca. 15 bis etwa 25%. Dieser BiCom-Faser-Anteil gibt nach thermischer Auslösung des BiCom-Effektes eine erhöhte Festigkeit, sprich Flächenstabilität, und wirkt sich somit auch vorteilhaft auf die Abriebfestigkeit aus. Zur weiteren Erhöhung der Festigkeit wird vorzugsweise ein Vlies eingesetzt, das bei einem Druck von bis zu ca. 300 bar Wasserstrahl-verfestigt worden ist. Die Faserfeinheit beträgt ca. 0,5 bis ca. 8 dtex, vorzugsweise 2 dtex. Das Vlies zeichnet sich weiter durch ein Flächengewicht von ca. 80 bis etwa 160 g/m² aus, vorzugsweise 120 g/m², und eine Dicke von ca. 0,6 bis etwa 1,5 mm, vorzugsweise eine Dicke von ca. 0,8 mm.

Die Folie besteht bevorzugt aus einem PVC oder einer PVC-Mischung bei einer Dicke von ca. 0,1 bis etwa 0,4 mm, insbesondere einer Dicke von ca. 0,2 mm. Es wird vorzugsweise ein weiches bleifreien PVC-Material eingesetzt. Insbesondere werden FR-ausgerüstete Materialien eingesetzt. Alternativ besteht die Folie aus einem Polyolefin, insbesondere aus einem weichen Polyolefin mit einer in dem vorstehend genannten Intervall liegenden Materialstärke.

Das Kalandrierverfahren wird in einer Ausführungsform so eingestellt, daß sich eine Trennkraft zwischen der Folie und der textilen Schicht von ca. 20 bis etwa 35 N einstellt, vorzugsweise ungefähr 28 N nach dem Erkalten einer erfindungsgemäßen Verbund-Vorrichtung. Dazu wird beim Kalandrieren eine Temperatur von ca. 140 bis etwa 180°C eingestellt, vorzugsweise 160°C. Der Walzendruck beträgt ca. 1 bis etwa 6 bar, vorzugsweise 4 bar. Der Prozeß des Kalandrierens wird mit einer Geschwindigkeit von ca. 8 bis ca. 20 m/min gefahren, vorzugsweise mit ungefähr 10 m/min. Es wird bei Verwendung eines Teppichkalanders ein Teppichdruck von ca. 2 bis ca. 6 bar, vorzugsweise 2 bar eingestellt. So können in einer Ausführungsform der Erfindung eine bereits vorgefertigte Folie zusammen mit einer textilen Schicht über einen beheizten Kalander geführt werden, um anschließend nach Einbettung des Textils in der erweichten Folie mit sehr hoher Trennfestigkeit miteinander verbunden zu sein.

Da je nach Ausführungsform der Erfindung die Vorrichtung zu einer Rolle aufgewickelt und zu einem Band zugeschnitten wird oder durch Stanzen, Schneiden und/oder sonstiges Trennen beispielsweise in spezifische Formen einer Schutzvorrichtung als Abdeckung gebracht wird, können die nach dem Stand der Technik üblichen Walzenbreiten des Kalanders eingesetzt werden, so daß sich ein insgesamt sehr effektives Herstellungsverfahren einer erfindungsgemäßen Vorrichtung in seiner Grundform ergibt. Schritte weiter formgebender Nachbearbeitung sind dabei keineswegs ausgeschlossen. Ausführungsformen fertig konfektionierter und sofort einsatzbereiter Scheuerschutzvorrichtungen werden nachfolgend noch unter Bezug auf die Abbildungen der Zeichnung unter Angabe weiterer Vorteile beschrieben werden.

In einer besonders bevorzugten Ausführungsform der Erfindung ist an einer Außenseite der Folie, die der textilen Schicht abgewandt ist, ein Klebstoff aufgetragen, insbesondere ein Selbstklebstoff. Es ergibt sich somit ein dreischichtiger Aufbau, bei dem die textile Schicht mit der darauf aufkalandrierten Folie auf einer freien Außenseite der Folie mit einem Selbstkleber versehen ist, so daß keine weiteren Maßnahmen zur Fixierung einer derartigen Vorrichtung an einem Kabelbaum mehr ergriffen werden müssen. Diese wären beispielsweise eine Fixierung durch Kabelbinder oder Verkleben durch separat zugeführten Kleber oder gar eine mindestens endseitige Fixierung durch bekannte PVC-Klebebänder. Auch ein Festnieten oder sonstiges Aufbringen von Manschetten ist in besonderen Einsatzfällen sinnvoll anwendbar.

Bei dem Klebstoff handelt es sich vorzugsweise um einen gegenüber Weichmachern resistenten Haftklebstoff aus einem Acrylat, insbesondere handelt es sich um einen Reinacrylatklebstoff. Der Klebstoff ist insbesondere als Schicht mit einem Flächengewicht von ca. 30 bis etwa 80 g/m² aufgetragen, vorzugsweise mit etwa 40 bis ca. 50 g/m². Auch andere Formen des Auftrags sind bei Anpassung auf besondere Einsatzcharakeristika möglich, wie z.B. eine nicht durchgehende Kleberschicht als Punkt- oder Schlitzstruktur. Durch derartige Maßnahmen der Konfektionierung ist der Klebstoff zusätzlich hinsichtlich seiner Abziehkraft definiert einstellbar. Als ein wesentlicher Vorteil des vorstehend beschriebenen Aufbaus ergibt sich, daß eine Abrollkraft einer erfindungsgemäßen Vorrichtung in der bevorzugten Form eines Wickelbandes auch dann dem Wickelvorgang angemessen ist, wenn die textile Schicht nicht zusätzlich behandelt wurde. Auch kann auf eine Zwischenschicht oder sonstige Hilfsmittel verzichtet werden. D.h., daß das Band direkt auf sich selbst gewickelt wird. Die textile Schicht weist eine im Vergleich zu Kabelbäumen oder sonstigen Einsatzfällen sehr viel unebenere äußere Oberfläche auf, so daß es bei jeder Art von Konfektionierung des Klebers stets nur zu punktweise ausgebildeten Haftkontakten kommt.
Damit wird die Abrollkraft auf ein stets tolerierbares Maß begrenzt, wobei ein Abwickeln stets ohne verbleibende Kleber-Rückstände auf der Oberfläche der textilen Schicht von Statten geht.

Die textile Schicht besteht in verschiedenen Ausführungsformen der Erfindung aus einem Gewebe, einem Gewirke oder einem Vlies, wobei durch an sich aus dem Stand der Technik für textile Schichten bekannte Maßnahmen und Verfahren eine möglichst engmaschige Struktur besonders für eine erfindungsgemäße Vorrichtung bevorzugt wird, wie vorstehend ausgeführt. Für eine erfindungsgemäße Vorrichtung ergibt sich bei hoher Abriebfestigkeit durch eine dauerhaft hohe Flexibilität und gutes Abziehverhalten bei Haftung auf sich selber, also Haftung Kleber auf textiler Schicht, eine leichte Verarbeitung. Eine erfindungsgemäße Vorrichtung weist im wesentlichen keine Neigung zur Wasseraufnahme auf und ist durch die Präsenz einer weiterhin geschlossenen Folie als integralem Bestandteil wasserdicht.

Damit weist eine erfindungsgemäße Vorrichtung bei einer geringen äußeren Bauhöhe eine ausgezeichnete Eignung als Ersatz bekannter Schutzvorrichtungen auf und ist aufgrund ihrer Flexibilität auch zum Nachrüsten als Abrieb- bzw. Scheuerschutz und/oder Lärmdämmung in besonderer Weise geeignet. Da sie aufgrund der geringen Bauhöhe auch sehr platzsparend ist, hat beispielsweise eine Rolle ein wesentlich größeres Fassungsvermögen als dies bei bekannten Materialien der Fall ist. Ferner lassen sich ebenfalls aufgrund der geringen Bauhöhe überlappende Wicklungen sehr leicht in fast beliebiger Form unter Verwendung klassischer Bandbreiten von 19, 25 und 38 mm herstellen.

Der hohe Grad an Flexibilität einer erfindungsgemäßen Vorrichtung im Aufbau und der Auswahl von Materialien oder Substanzen soll hier an einem weiteren Beispiel verdeutlicht werden: Die Vorrichtung ist in der textilen Schicht, der Folie und/oder einem Klebstoff mit einem Flaramhemmer ausgerüstet. Es ergeben sich somit sechs Möglichkeiten zur Ausstattung einer erfindungsgemäßen Vorrichtung mit einem den einschlägigen Normen entsprechenden Brennverhalten, die je nach spezieller Anforderung genutzt werden können.

Nachfolgend werden Ausführungsbeispiele der Erfindung anhand der Zeichnung näher erläutert. Es zeigt
- Figur 1: eine erste Ausführungsform einer erfindungsgemäßen Vorrichtung in einer Schnittdarstellung und
- Figur 2: eine Ausführungsform einer erfindungsgemäßen Vorrichtung als flexibles Nachrüstteil an einer Abzweigung eines Kabelbaumes.

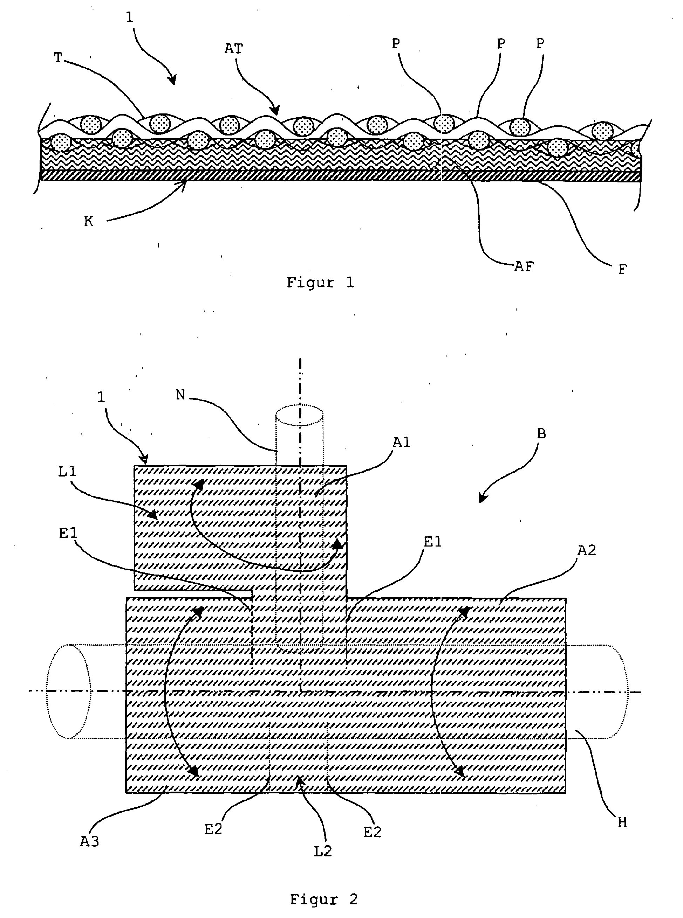

Die Abbildung von Figur 1 zeigt eine skizzierte Darstellung einer ersten Ausführungsform einer erfindungsgemäßen Vorrichtung 1 in einer Schnittdarstellung. Durch das Kalandrieren ist eine textile Schicht T mit einer erwärmten Folie F derart verbunden worden, daß die Folie F gleichsam als Kleber für die Verbindung von textiler Schicht T und Folie F wirkt. Weitere Hilfsstoffe sind also in dieser Ausführungsform vorteilhafterweise nicht erforderlich. Durch diese Verbindung wird auch verhindert, daß einzelne Fasern aus der textilen Schicht T herausgezogen werden können. Zudem stabilisieren sich beide Komponenten gegenseitig. So ist die textile Schicht T nun schiebefest, und die Folie F ist hinsichtlich ihrer Dehnbarkeit stabilisiert. Damit ist vorzugsweise auch bei einem Umwickeln der Vorrichtung 1 als Klebeband unter Zugspannung bei ausreichend hoher Flexibilität des Klebebandes keine wesentliche Dehnung eines derartigen Klebebandes mehr möglich. Daher wird beispielsweise ein mit einer erfindungsgemäßen Vorrichtung 1 in Form eines Klebebandes umwickelter Kabelbaum über die Zeit gesehen durch die Umwicklung auch nicht starr und steif, wie dies unter Verwendung von Wickelbändern aus PVC nach dem Stand der Technik der Fall ist.

Es kann in einer Ausführungsform der Erfindung auch ein Schritt der Vorfertigung eingespart werden, nämlich das separate Herstellen der Folie F. Die Folie wird direkt auf den textilen Träger extrudiert und ist dadurch mit diesem verbunden. Bevorzugt wird jedoch eine separate Vorfertigung der Folie mit Endverarbeitung zu der Vorrichtung 1 und anschließender Konfektionierung in unterschiedliche Produktformen. Verwendet wird eine Folie F einer Dicke von ca. 0,2 mm aus einem weichen bleifreien PVC-Material mit FR- Ausrüstung.

In einer bevorzugten Ausführungsform der Erfindung wird, im Gegensatz zu der Schnittdarstellung von Figur 1, anstelle eines Gewebes ein Gewirke als textile Schicht T verwendet. Konkret weist das Gewirke eine Kette aus einem Polyester-Glattgarn einer Feinheit von 76 dtex f24 x 1 auf. Das Flächengewicht des Gewirkes beträgt bei einer Dicke von ca. 0,3 mm ca. 128 g/m². Das Gewirke wird mit 250 Maschen-Reihen pro 10 cm und einer Kettfadenzahl von 24 gg konstruiert. Das Gewirke weist einen Schußeintrag mit einer geschlossenen Franse als Bindung der Kette auf. Der Schuß des Gewirkes besteht aus einem texturierten Polyester-Garn einer Feinheit von 167 dtex f48 x 2, wobei beide Garne schwarz Spinndüsen-gefärbt sind. Ein derartiges Gewirke ist jedoch im Schnitt nicht so gut darstellbar wie ein Gewebe, so daß zur Veranschaulichung eines durch teilweise Einbettung der textilen Schicht T in die Folie F gekennzeichneten prinzipiellen Aufbaus einer erfindungsgemäßen Vorrichtung 1 ein Gewebe benutzt wurde.

Ergänzt wird die Vorrichtung von Figur 1 durch eine Schicht Selbstkleber K in Form eines Reinacrylatklebstoffs. Der Selbstkleber K wird auf einer freien Außenfläche AF der Folie F aufgebracht. Diese Fläche ist im Vergleich zu einer freien Außenfläche AT der textilen Schicht T wesentlich ebener. Dadurch ist die Schicht Selbstkleber K als ebene und geschlossene Schicht im wesentlichen gleichbleibender Mächtigkeit relativ einfach aufzutragen. Ein weiterer Vorteil der Vorrichtung 1 tritt unmittelbar bei der Verarbeitung auf: Die Vorrichtung wird insbesondere als Wickelband einer klassischen Bandbreite von 19, 25 und 38 mm hergestellt und in Rollenform gespeichert. Dadurch wird die Vorrichtung zwingend auf sich selbst gewickelt. Es kommt also die Schicht Selbstkleber K auf der freien Außenfläche AT der textilen Schicht T an Stellen P in Kontakt, die in Figur 1 exemplarisch eingezeichnet sind. An den Stellen P bilden sich jedoch nur punktförmige Klebeverbindungen aus, die beim Abrollen einen stets angemessenen Aufwand an Abrollkraft garantieren. Es sind vorteilhafterweise also keine Zwischenlagen oder besonderen Vergütungen oder Beschichtungen an der freien Außenfläche AT der textilen Schicht T vorzusehen. Im Gegensatz zu einer solchen Situation des Abrollens bildet sich im Einbau, beispielsweise zur Umwicklung eines Kabelbaums, stets eine großflächige Klebeverbindung aus. Eine derartige Klebeverbindung garantiert einen stets sicheren Halt der Vorrichtung 1.

In der Abbildung der Figur 2 ist eine alternative Verwendungsform der Vorrichtung 1 skizziert. Hier wird eine erfindungsgemäßen Vorrichtung 1 als flexibles Nachrüstteil in Form einer Umhüllung B an einer Abzweigung AZ eines Kabelbaumes verwendet. Ein durch Punktlinien angedeuteter Kabelbaum mit einem Hauptstrang H und einem Abzweig N soll gegen Abrieb geschützt werden. Die Umhüllung aus dem Material von Figur 1 und der vorstehenden Beschreibung ist dazu als Fläche mit drei Armen A1, A2, A3 ausgestanzt worden, so daß sich eine ungefähr y-förmige Figur ergibt. Die Arme A1, A2, A3 sind senkrecht zu einer jeweiligen Längsachse L des Hauptstrangs H und des Abzweigs N in ihrer Breite dem Durchmesser angepaßt. Durch Einschnitte E1, E2 sind die Arme A1, A2, A3 ungefähr P-förmig oder keulenartig ausgebildet, um im verklebten Zustand die Teile des Kabelbaums möglichst vollständig zu umschließen. Dazu werden in diesem Ausführungsbeispiel auch zwei sich im wesentlichen gegenüberliegende Lappen L1, L2 übereinanderliegend miteinander verklebt. Hierdurch wird ein schnell anzubringender oder nachzurüstender Scheuerschutz bereitgestellt, der aufgrund seiner Klebkraft am Kabelbaum auch Kabelbinder in diesem Bereich ergänzen oder gar ersetzen kann.

### Bezugszeichenliste

- 1: Vorrichtung
- T: textile Schicht
- F: Folie
- K: Kleber
- AT: Außenfläche der textilen Schicht T
- AF: Außenfläche der Folie F
- P: punktförmige Stellen
- B: Abdeckung / Umhüllung
- A1: Arm der Umhüllung B
- A2: Arm der Umhüllung B
- A3: Arm der Umhüllung B
- N: Abzweig
- H: Hauptstrang
- L1: Lappen
- L2: Lappen
- E1: Einschnitt
- E2: Einschnitt

## Patentansprüche

1. Vorrichtung (1) zum Schutz eines Gegenstandes vor Beschädigungen, wobei die Vorrichtung (1) mindestens teilweise als punktuelle, linienförmige oder flächige Abdeckung einer Oberfläche des zu schützenden Gegenstandes ausgebildet ist,
**dadurch gekennzeichnet,**
**dass** die Vorrichtung (1) einen Schichtaufbau mit einer textilen Schicht (T) und einer darauf durch Aufkalandrieren flächig verbundenen Folie (F) umfasst, wobei
die Folie (F) zu dem zu schützenden Gegenstand hin vorhanden, und nach außen weisend die textile Schicht (T) angeordnet ist.

2. Vorrichtung nach Anspruch 1,
**dadurch gekennzeichnet, dass** die textile Schicht (T) als Gewebe, als Gewirke oder als Vlies ausgebildet ist.

3. Vorrichtung nach dem vorhergehenden Anspruch,
**dadurch gekennzeichnet, dass** die textile Schicht (T) aus Polyester, einem Polyamid und/oder anderen Synthesefasern- oder Synthesefilamentgarnen besteht.

4. Vorrichtung nach einem oder beiden der vorhergehenden Ansprüche, **dadurch gekennzeichnet, dass** das Gewebe eine Kettfadendichte von ca. 15 bis etwa 25 Fäden pro Zentimeter aufweist, vorzugsweise jedoch ungefähr 20 Fäden pro Zentimeter und/oder
eine Schussfadendichte von ca. 10 bis etwa 22 Fäden pro Zentimeter aufweist, vorzugsweise jedoch ungefähr 17 Fäden pro Zentimeter.

5. Vorrichtung nach einem oder mehreren der vorhergehenden Ansprüche 2 bis 4, **dadurch gekennzeichnet, dass** das Gewebe ein Flächengewicht von ca. 70 bis etwa 150 g/m² aufweist, vorzugsweise jedoch von ungefähr 95 g/m², und eine Dicke von ca. 0,1 bis etwa 0,3 mm aufweist, vorzugsweise jedoch von ungefähr 0,2 mm.

6. Vorrichtung nach einem oder mehreren der vorhergehenden Ansprüche,
**dadurch gekennzeichnet, dass** bei einer textilen Schicht (T) in Form eines Gewirkes als Kettgarn ein Polyester-Glattgarn eingesetzt wird und der Schuss des Gewirkes aus einem texturierten Polyester-Garn besteht.

7. Vorrichtung nach einem oder mehreren der vorhergehenden Ansprüche, **dadurch gekennzeichnet, dass** das Gewirke ein Flächengewicht von ca. 100 bis ca. 160 g/m² aufweist, vorzugsweise 145 g/m², und eine Dicke von insbesondere ca. 0,3 mm.

8. Vorrichtung nach einem oder mehreren der vorhergehenden Ansprüche, **dadurch gekennzeichnet, dass** die Kette des Gewirkes mit geschlossener Franse ausgebildet und insbesondere zusätzlich ein Schuss eingetragen ist.

9. Vorrichtung nach einem oder mehreren der vorhergehenden Ansprüche, **dadurch gekennzeichnet, dass** die textile Schicht (T) als Vlies ausgebildet ist aus Polyester-Fasern mit einem Anteil von ca. 5 bis etwa 45 %, vorzugsweise jedoch ca. 15 bis etwa 25 % Polyester-BiCom-Fasern oder anderen BiCom-Fasern.

10. Vorrichtung nach einem oder mehreren der vorhergehenden Ansprüche, **dadurch gekennzeichnet, dass** das Vlies ein Flächengewicht von ca. 80 bis etwa 160 g/m² aufweist, vorzugsweise 120 g/m² und
eine Dicke von ca. 0,6 bis etwa 1,5 mm aufweist, vorzugsweise ungefähr 0,8 mm.

11. Vorrichtung nach einem oder mehreren der vorhergehenden Ansprüche, **dadurch gekennzeichnet, dass** die Folie (F) eine Dicke von ca. 0,1 bis etwa 0,4 mm, vorzugsweise eine Dicke von ca. 0,2 mm aufweist und
aus PVC oder einer PVC-Mischung besteht, vorzugsweise einem weichen PVC, oder aus einem Polyolefin, insbesondere aus einem weichen Polyolefin.

12. Vorrichtung nach einem oder mehreren der vorhergehenden Ansprüche, **dadurch gekennzeichnet, dass** eine Trennkraft zwischen der Folie (F) und der textilen Schicht (T) ca. 20 bis etwa 35 N beträgt, vorzugsweise ungefähr 28 N.

13. Vorrichtung nach einem oder mehreren der vorhergehenden Ansprüche, **dadurch gekennzeichnet, dass** an einer der textilen Schicht (T) abgewandten Außenseite der Folie (F) ein Klebstoff (K) aufgetragen ist, insbesondere ein Selbstklebstoff (SK), der weichmacherresistent ist, und vorzugsweise aus einem Acrylat besteht und insbesondere ein Reinacrylatklebstoff ist, wobei der Klebstoff (K) als Schicht mit einem Flächengewicht von ca. 30 bis etwa 80 g/m² aufgetragen ist, vorzugsweise mit etwa 40 bis ungefähr 50 g/m².

14. Vorrichtung nach einem oder mehreren der vorhergehenden Ansprüche, **dadurch gekennzeichnet, dass** die Vorrichtung (1) zur linienförmige Abdeckung des Gegenstandes als Wickelband zur Herstellung einer Bandagierung oder Umwicklung ausgebildet ist, das vorzugsweise in Form einer Rolle auf sich selbst aufgewickelt ist.

15. Verfahren zur Herstellung einer Vorrichtung (1) zum Schutz eines flexiblen, langgestreckten Gegenstandes vor Beschädigungen
**dadurch gekennzeichnet,**
**dass** auf eine textile Schicht (T) eine Folie (F) flächig aufkalandriert wird, wobei eine Außenfläche (AF) der Folie (F) als Kontaktfläche zum schäkenden Gegenstand ausgebildet wird.

16. Verfahren nach dem vorhergehenden Anspruch, **dadurch gekennzeichnet, dass** auf eine der textilen Schicht (T) abgewandten Außenseite der Folie (F) ein Klebstoff (K) aufgetragen und vorzugsweise zu einer Rolle aufgewickelt und zu einem Band zugeschnitten wird.

17. Verfahren nach einem oder mehreren der vorhergehenden Ansprüche 15 bis 16, **dadurch gekennzeichnet, dass** eine bereits vorgefertigte Folie (F) zusammen mit einer textilen Schicht (T) über einen beheizten Kalander geführt wird, um anschließend nach Einbettung der textilen Schicht (T) in der erweichten Folie (F) mit hoher Trennfestigkeit miteinander verbunden zu sein.

## Claims

1. Device (1) for protecting an object against damage, wherein the device (1) is at least partially designed as a punctiform, linear or flat cover for a surface of the object to be protected, **characterised in that** the device (1) comprises a layer structure with a textile layer (T) and a film (F) which is joined thereto over the entire surface as a result of being applied by calendering, wherein the film (F) is provided on the side facing the object to be protected and the textile layer (T) is arranged such that it points outwards.

2. Device according to claim 1, **characterised in that** the textile layer (T) is designed as a fabric, as a knitted material or as a nonwoven.

3. Device according to the preceding claim, **characterised in that** the textile layer (T) consists of polyester, a polyamide and/or other synthetic fibre yarns or synthetic filament yarns.

4. Device according to one or both of the preceding claims, **characterised in that** the fabric has a warp density of approx. 15 to approx. 25 threads per centimetre, but preferably approx. 20 threads per centimetre, and/or has a weft density of approx. 10 to approx. 22 threads per centimetre, but preferably approx. 17 threads per centimetre.

5. Device according to one or more of the preceding claims 2 to 4, **characterised in that** the fabric has a basis weight of approx. 70 to approx. 150 g/m2, but preferably approx. 95 g/m2, and a thickness of approx. 0.1 to approx. 0.3 mm, but preferably approx. 0.2 mm.

6. Device according to one or more of the preceding claims, **characterised in that**, for a textile layer (T) in the form of a knitted material, a smooth polyester yarn is used as the warp and a textured polyester yarn is used for the weft of the knitted material.

7. Device according to one or more of the preceding claims, **characterised in that** the knitted material has a basis weight of approx. 100 to approx. 160 g/m2, preferably 145 g/m2, and a thickness of in particular approx. 0.3 mm.

8. Device according to one or more of the preceding claims, **characterised in that** the warp of the knitted material is formed with a closed fringe and in particular a weft is additionally entered.

9. Device according to one or more of the preceding claims, **characterised in that** the textile layer (T) is designed as a nonwoven layer/fleece composed of polyester fibres having a content of approx. 5 to approx. 45%, but preferably approx. 15 to approx. 25%, polyester bicomponent fibres or other bicomponent fibres,

10. Device according to one or more of the preceding claims, **characterised in that** the nonwoven layer/fleece has a basis weight of approx. 80 to approx. 160 g/m2, preferably 120 g/m2, and a thickness of approx. 0.6 to approx. 1.5 mm, preferably approx. 0.8 mm.

11. Device according to one or more of the preceding claims, **characterised in that** the film (F) has a thickness of approx. 0.1 to approx. 0.4 mm, preferably a thickness of approx. 0.2 mm, and consists of PVC or a PVC blend, preferably a soft PVC, or of a polyolefin, in particular of a soft polyolefin.

12. Device according to one or more of the preceding claims, **characterised in that** a separating force between the film (F) and the textile layer (T) is approx. 20 to approx. 35 N, preferably approx. 28 N.

13. Device according to one or more of the preceding claims, **characterised in that** an adhesive (K) is applied to an outer side of the film (F) which faces away from the textile layer (T), in particular a self-adhesive (SK) which is resistant to plasticisers and preferably consists of an acrylate and in particular is a pure acrylate adhesive, wherein the adhesive (K) is applied as a layer with a basis weight of approx. 30 to approx. 80 g/m2, preferably approx. 40 to approx. 50 g/m2.

14. Device according to one or more of the preceding claims, **characterised in that** the device (1) is designed to cover the object in a linear manner as a wound strip for producing a bandage or for winding around the object, said strip preferably being wound up on itself in the form of a roll.

15. Method for producing a device (1) for protecting a flexible, elongate object against damage, **characterised in that** a film (F) is applied to the entire surface of a textile layer (T) by calendering, wherein an outer surface (AF) of the film (F) is designed as a contact surface for the object to be protected.

16. Method according to the preceding claim, **characterised in that** an adhesive (K) is applied to an outer side of the film (F) which faces away from the textile layer (T) and is preferably wound up to form a roll and cut to form a strip.

17. Method according to one or more of the preceding claims 15 to 16, **characterised in that** a pre-manufactured film (F) is passed over a heated calender together with a textile layer (T) in order to join them to one another with a high separation resistance once the textile layer (T) has been embedded in the softened film (F).

## Revendications

1. Dispositif (1) pour protéger un objet des endommagements, dans lequel le dispositif (1) est configuré au moins en partie comme recouvrement ponctuel, linéaire ou bidimensionnel d'une surface de l'objet à protéger,
**caractérisé en ce que**
le dispositif (1) comprend une structure en couches avec une couche textile (T) et une feuille (F) fixée dessus en surface par calandrage, sachant que
la feuille (F) est disposée du côté de l'objet à protéger et que la couche textile (T) est tournée vers l'extérieur.

2. Dispositif selon la revendication 1, **caractérisé en ce que** la couche textile (T) est configurée comme tissu tissé, comme tricot ou comme non-tissé.

3. Dispositif selon la revendication précédente, **caractérisé en ce que** la couche textile (T) consiste en polyester, en un polyamide et/ou en d'autres fils de fibres ou de filaments synthétiques.

4. Dispositif selon l'une ou les deux revendications précédentes, **caractérisé en ce que** le tissu présente une densité des fils de chaîne d'environ 15 à quelques 25 fils par centimètre, de préférence toutefois environ 20 fils par centimètre et/ou
qu'il présente une densité de fils de trame d'environ 10 à quelques 22 fils par centimètre, de préférence toutefois environ 17 fils par centimètre.

5. Dispositif selon l'une ou plusieurs des revendications précédentes, **caractérisé en ce que** le tissu présente un poids surfacique d'environ 70 à quelques 150 g/m², de préférence toutefois d'environ 95 g/m², et une épaisseur d'environ 0,1 à quelque 0,3 mm, de préférence toutefois d'environ 0,2 mm.

6. Dispositif selon l'une ou plusieurs des revendications précédentes,
**caractérisé en ce que**, pour une couche textile (T) en forme de tricot, un fil lisse de polyester est utilisé comme fil de chaîne et **en ce que** la trame du tricot consiste en un fil de polyester texturé.

7. Dispositif selon l'une ou plusieurs des revendications précédentes, **caractérisé en ce que** le tricot présente un poids surfacique d'environ 100 à environ 160 g/m², de préférence d'environ 145 g/m², et une épaisseur d'environ 0,3 mm en particulier.

8. Dispositif selon l'une ou plusieurs des revendications précédentes, **caractérisé en ce que** la chaîne du tricot est configurée avec une frange fermée et qu'en particulier une trame est insérée en plus.

9. Dispositif selon l'une ou plusieurs des revendications précédentes, **caractérisé en ce que** la couche textile (T) est configurée comme un non-tissé en fibres de polyester avec une proportion d'environ 5 à environ 45 %, mais de préférence d'environ 15 à environ 25 % de fibres polyester-BiCom ou d'autres fibres BiCom.

10. Dispositif selon l'une ou plusieurs des revendications précédentes, **caractérisé en ce que** le non-tissé présente un poids surfacique d'environ 80 à environ 160 g/m², de préférence de 120 g/m² et
une épaisseur d'environ 0,6 à environ 1,5 mm, de préférence d'environ 0,8 mm.

11. Dispositif selon l'une ou plusieurs des revendications précédentes, **caractérisé en ce que** la feuille (F) présente une épaisseur d'environ 0,1 à quelque 0,4 mm, de préférence une épaisseur de 0,2 mm et
consiste en PVC ou en un mélange de PVC, de préférence en un PVC souple, ou en une polyoléfine, en particulier en une polyoléfine souple.

12. Dispositif selon l'une ou plusieurs des revendications précédentes, **caractérisé en ce que** la force de séparation entre la feuille (F) et la couche textile (T) s'élève à environ 20 jusqu'à quelques 35 N, de préférence à peu près à 28 N.

13. Dispositif selon l'une ou plusieurs des revendications précédentes, **caractérisé en ce qu'**une colle (K) est appliquée sur une face extérieure de la feuille (F) détournée de la couche textile (T), en particulier une colle autocollante (SK) qui résiste aux plastifiants et consiste de préférence en un acrylate, et qui est en particulier une colle d'acrylate pur, sachant que la colle (K) est appliquée comme couche avec un poids surfacique d'environ 30 à quelques 80 g/m², de préférence de quelques 40 à environ 50 g/m².

14. Dispositif selon l'une ou plusieurs des revendications précédentes, **caractérisé en ce que** le dispositif (1) pour le recouvrement linéaire de l'objet est configuré comme ruban d'embobinage pour la réalisation d'un bandage ou d'une enveloppe, le ruban soit enroulé de préférence sur lui-même en forme d'un rouleau.

15. Procédé pour la fabrication d'un dispositif (1) pour la protection d'un objet flexible et allongé contre les endommagements,
**caractérisé en ce que**
l'on applique en surface par calandrage une feuille (F) sur une couche textile (T), moyennant quoi une surface extérieure (AF) de la feuille (F) est formée comme surface de contact avec l'objet à protéger.

16. Procédé selon la revendication précédente, **caractérisé en ce que** sur une face extérieure de la feuille (F) détournée de la couche textile (T), une colle (K) est appliquée et est bobinée de préférence en un rouleau et découpée en un ruban.

17. Procédé selon l'une ou plusieurs des revendications précédentes 15 et 16, **caractérisé en ce qu'**une feuille (F) déjà préfabriquée est amenée ensemble avec une couche textile (T) par-dessus une calandre chauffée, pour qu'elles soient ensuite assemblées ensemble avec une haute résistance à la séparation après l'incorporation de la couche textile (T) dans la feuille (F) ramollie.
